# FASCICULE DE BREVET EUROPEEN

(11) **EP 2 427 755 B1**
(45) Date de publication et mention de la délivrance du brevet: **14.10.2015**
(21) Numéro de dépôt: 09779580.1
(22) Date de dépôt: 28.05.2009
(51) Int. Cl.: G01N 21/89, C23C 2/00, G01N 21/71, G01B 11/06, B23K 26/08, B23K 26/40, B23K 26/00, B23K 26/03, B23K 26/06

(54) **MÉTHODE ET DISPOSITIF D'ANALYSE SPECTRALE D'UNE COUCHE DE REVÊTEMENT MÉTALLIQUE DÉPOSÉ À LA SURFACE D'UNE BANDE D'ACIER**
VERFAHREN UND VORRICHTUNG ZUR SPEKTRALANALYSE EINER AUF DER OBERFLÄCHE EINES STAHLBANDS ABGESCHIEDENEN METALLBESCHICHTUNG
METHOD AND DEVICE FOR THE SPECTRAL ANALYSIS OF A METAL COATING LAYER DEPOSITED ON THE SURFACE OF A STEEL STRIP

(30) Priorité: 07.05.2009 EP 09290338
(43) Date de publication de la demande: 14.03.2012
(73) Titulaire: Primetals Technologies France SAS, 42600 Savigneux (FR)
(72) Inventeur: PERRET, Jean, F-42600 Montbrison (FR); MICHAUT, Marc, F-42152 L'Horme (FR); CLOUTOT, Laurent, 8956 Killwangen (CH)
(74) Mandataire: Metals@Linz
(86) Numéro de dépôt international: PCT/EP2009/056564
(87) Numéro de publication internationale: WO 2010/127713

(56) Documents cités:
- WO-A1-02/101366
- DE-A1- 4 138 157
- US-A- 1 240 212
- BALZER H ET AL: "Online coating thickness measurement and depth profiling of zinc coated sheet steel by laser-induced breakdown spectroscopy" SPECTROCHIMICA ACTA B, vol. 60, 12 septembre 2005 (2005-09-12), pages 1172-1178, XP002560625
- ORZI D J O ET AL: "Identification and measurement of dirt composition of manufactured steel plates using laser-induced breakdown spectroscopy" APPLIED SPECTROSCOPY SOC. APPL. SPECTROSC USA, vol. 58, no. 12, décembre 2004 (2004-12), pages 1475-1480, XP002560629 ISSN: 0003-7028

## Description

La présente invention concerne une méthode et un dispositif d'analyse spectrale d'une couche de revêtement métallique déposé à la surface d'une bande d'acier selon le préambule des revendications 1 et 2.

L'invention se rapporte en particulier au contrôle de la qualité d'un revêtement métallique déposé au trempé sur une bande métallique en défilement continu, par exemple un revêtement d'alliage de zinc ayant subit un traitement d'alliation.

La galvanisation au trempé de bandes d'acier laminé défilant en continu est une technique bien connue. Elle comporte essentiellement deux variantes, celle où la bande sortant du four de galvanisation descend obliquement dans un bain de zinc liquide et se trouve défléchie verticalement vers le haut par un rouleau immergé dans ledit zinc liquide. L'autre variante consiste à défléchir la bande d'acier en défilement verticalement et vers le haut à sa sortie du four et à la faire ensuite défiler dans un chenal vertical contenant du zinc liquide sustenté magnétiquement.

La cinétique de formation de ce dépôt est connue de l'homme de métier, elle a fait l'objet de nombreuses communications parmi lesquelles « Modelling of galvanizing reactions » de Giorgi et All. dans « La Revue de Métallurgie - CIT » d'octobre 2004. Cette documentation établit qu'au contact d'un mélange liquide de revêtement avec la bande se produit une dissolution du fer en provenance de la bande d'acier qui, pour une part, participe à la formation, sur la surface de la bande, d'une couche de combinaison d'environ 0,1µ de composé Fe₂Al₅Znₓ et, pour une autre part, diffuse vers le bain de mélange liquide tant que la couche de Fe₂Al₅Znₓ n'est pas formée de manière continue. La couche de Fe₂Al₅Znₓ sert de support à la couche protectrice de zinc alors que le fer dissous va contribuer à former dans le mélange liquide des précipités composés de Fe, Al et Zn nommés « mattes » ou « dross ».

Le revêtement des bandes d'acier avec un alliage métallique à base de zinc est utilisé dans de multiples applications comme la carrosserie automobile, l'électroménager, la construction. Plusieurs revêtements se distinguent par leur composition et d'éventuels traitements postérieurs à leur application sur la bande.

L'un deux, en particulier, subit un traitement dit « d'alliation » par réchauffage qui assure par diffusion la formation d'un alliage entre le fer de l'acier et le zinc du revêtement. Ce type de revêtement est généralement désigné par l'abréviation « GA » ou le terme « galvanneal ». La galvanisation GA assure une bonne protection de l'acier contre la corrosion et certaines qualités particulières, comme sa porosité et sa texture de surface, le rendent en outre particulièrement apte à la peinture dont il augmente l'adhérence et facilitent le soudage par résistance des bandes revêtues. Pour ces raisons, il est principalement utilisé dans l'industrie automobile.

L'alliage fer zinc d'un revêtement GA peut se présenter sous la forme de plusieurs phases de composition et de maille cristallographiques différentes. Afin d'assurer au revêtement des caractéristiques optimales d'emboutissage et de peinture, des études ont montré que la teneur en fer en surface du revêtement devait rester faible sans toutefois être nulle.

De nombreux paramètres sont de nature à affecter la microstructure de la couche de galvanneal : la composition chimique de la bande et celle du bain de revêtement, la rugosité de surface de la bande, la température du bain de revêtement et, surtout, la température dans le four d'alliation et la vitesse de défilement de la bande.

Des études ont été menées afin de définir des moyens de tracer l'évolution de la teneur en zinc, fer et aluminium à travers l'épaisseur de dépôts galvanneal afin de mieux connaître l'influence de chaque paramètre et de pouvoir assurer un suivi de la qualité des bandes revêtues. Plusieurs méthodes d'établissement du profil de concentration en éléments d'alliages sur des échantillons de bandes revêtues ont été proposées, parmi lesquelles la mesure par spectroscopie de type « Glow discharge optical emission spectroscopy GD-OES» ou de type « Laser induced breakdown spectroscopy LIBS ».

Le document WO 00/08446 présente des bases d'une telle méthode d'analyse par ablation laser (LIBS) et le document US 2003/0016353 apporte un certain nombre d'amélioration visant à augmenter la précision des mesures.

Une méthode d'analyse spectrale d'une couche de revêtement métallique déposé à la surface d'une bande d'acier, ladite bande étant mise en défilement horizontal est décrit aussi par le document DE 41 38 157 A1

Toutefois, les méthodes d'analyse décrites présentent de réelles difficultés de mise en oeuvre pour une utilisation en temps réel sur une ligne de galvanisation où la bande défile à une vitesse allant jusqu'à plus de 3 mètres par seconde.

En effet, de manière connue, le procédé LIBS utilise l'interaction laser et matière afin de chauffer une cible à analyser à très haute température et à générer des raies spectrales caractéristiques du matériau chauffé au point ciblé de la bande. Un laser pulsé tire donc sur la cible pendant un temps très court, de l'ordre de 10 nanosecondes, avec une énergie de quelques dizaines de milli-Joules focalisée sur une très faible surface. Il se créé un micro-plasma qui émet un continuum de radiations et, après quelques microsecondes, apparaissent les premières raies spectrales caractéristiques du matériau constituant la cible et donc du revêtement de bande. Un spectromètre réalise l'analyse spectrale de la lumière émise dans une porte temporelle de mesure située dans les microsecondes suivant le tir laser quand le bruit de fond du continuum s'est suffisamment réduit.

Or, durant une seule microseconde de décalage entre le tir laser et la mesure par le spectromètre, et pour un défilement de l'ordre de 3 mètres par seconde, la bande et donc .

la cible et le plasma se sont déplacés de 3 millimètres. Pour réaliser une mesure sur une cible mobile, un homme du métier conviendrait donc de créer un décalage de position entre l'axe de tir du laser et l'axe optique du dispositif de mesure, ce qui est très difficile à assurer avec une précision suffisante d'autant que la vitesse de défilement de la bande en cours de galvanisation peut varier dans une large mesure en fonction de l'épaisseur de ladite bande, de la capacité de chauffage du four de galvanisation, de l'épaisseur de revêtement visé, des performances des dispositifs d'essorage du revêtement liquide.

De plus, des vibrations ou déformations intrinsèques de la bande ou de sa trajectoire de défilement rendent ladite mesure très inexacte sachant qu'une précision de ciblage local est souhaitée dans un intervalle de quelques microns. Un article « New approach to online monitoring of the Al depth profile of the hot dip galvanised sheet steel using LIBS », H. Balzer et al., publié le 29 mars 2006, Springer Verlag 2006 présente à cet effet un exemple de système faisant appel à une compensation de vibration complexe. Dans ce même article, il est mentionné que ce système est adapté pour des vitesses faibles de défilement de bande permises (moins de 1m/s) alors qu'industriellement les vitesses requises peuvent être de l'ordre de 3 à 4 m/s. Un tel système est donc au-delà de ses capacités pour compenser des vibrations en conséquence.

Un but de la présente invention est de permettre une mesure d'analyse spectrale d'une couche de revêtement métallique déposé à la surface d'une bande d'acier, ladite mesure étant appropriée au fait que ladite bande est en défilement. Il est à noter que la bande peut avoir différents formats ou diverses vitesses de défilement, potentiellement au-delà de 1 m/s. Une telle mesure est rendue possible au moyen d'une méthode décrite par la revendication 1. De même, un dispositif pour la mise en oeuvre de ladite méthode est également proposé en plusieurs sous-revendications couvrant plusieurs variantes avantageuses adaptées unitairement à l'invention. Enfin, des utilisations dudit dispositif appropriées au cadre de l'invention sont aussi proposées au travers de sous-revendications.

A partir d'une méthode d'analyse spectrale d'une couche de revêtement métallique déposé à la surface d'une bande d'acier, l'invention se caractérise par les étapes suivantes :
- ladite bande est mise en défilement selon un arc de cercle en surface externe d'un rouleau en rotation et à paroi cylindrique guidant la bande par contact,
- un faisceau dit d'ablation laser est conduit dans une cavité interne à la paroi cylindrique afin d'être mis en incidence optique sous un axe normal à la surface externe du rouleau sur un point de contact ciblé de la bande et du rouleau, le passage dudit faisceau au travers de la paroi étant effectué par une ouverture de paroi, transparente au faisceau,
- une distribution d'émission spectrale plasmique provenant de l'ablation laser au point de contact est recueillie par retour optique sous la direction de l'axe normal à la surface externe du rouleau et au travers de l'ouverture afin d'être conduite vers une unité de mesure spectrale,
- l'axe normal à la surface externe adaptée à l'incidence et au retour optiques est mis en rotation synchrone avec le rouleau.

Le rouleau peut être avantageusement moteur ou porteur de n'importe quel type, tel qu'un rouleau d'entrainement de bande ou bien un rouleau de guidage entrainé par la bande. Un aspect majeur est que la méthode de mesure selon l'invention assure que la bande est et reste en contact sur la portion d'arc de cercle (par exemple sur 90°) afin que le point cible du laser soit exactement à l'intersection de la surface externe du rouleau et du revêtement de bande. Ainsi, tout risque de faire une mesure hors du champ voulu est écarté, parce que toute vibration de la bande en défilement est ainsi complètement atténuée. Le rouleau exerce une tension naturelle favorisant un placage parfait de la bande à la surface externe dudit rouleau. Des systèmes de tension annexes de la bande au rouleau peuvent toutefois être ajoutés dans ce sens.

Cette méthode peut être mise en oeuvre au moyen d'un dispositif simple et présentant des variantes de réalisation multiples qui en particulier faciliteront son installation au niveau de rouleaux dans une ligne de traitement de bande d'acier.

En particulier, un tel dispositif de mise en oeuvre de la méthode selon l'invention telle qu'adaptée à l'analyse spectrale d'une couche de revêtement métallique déposé à la surface d'une bande d'acier, peut être caractérisé par :
- un émetteur du faisceau dit d'ablation laser, un récepteur d'émission spectrale plasmique,
- un premier parcours optique disposé en sortie de 1 émetteur et adapté à la conduite du faisceau d'ablation laser dans la cavité de rouleau et présentant un moyen de guidage optique pour la mise en incidence du dit faisceau sur le point de contact ciblé,
- un second parcours optique disposé en entrée du récepteur et adapté pour recueillir la distribution d'émission spectrale plasmique au travers dudit moyen de guidage optique,
- au moins le moyen de guidage optique est rotatif par un couplage mécaniquement synchrone à la rotation du rouleau.

Afin de pouvoir assurer une incidence du laser ainsi qu'un retour optique de la distribution plasmique au point ciblé, le moyen de guidage optique peut comprendre un miroir dichroïque et incliné à 45° par rapport à l'axe normal et à l'axe de rotation du rouleau. Grâce à ce miroir, une mise sous direction du faisceau incident selon l'axe normal ainsi d'un faisceau de retour optique est rendu possible et permet de n'utiliser qu'un seul chemin optique sur l'axe normal. Le miroir dichroïque est donc au moins disposé sur l'axe normal.

Avantageusement, le premier parcours optique peut comprendre un guide de lumière, tel qu'une fibre optique ou un guide air qui permettent de mieux distribuer, c'est-à-dire d'amener la lumière incidente ou de reconduire la lumière émise par le plasma, directement au point de cible ou par l'intermédiaire du miroir dichroïque respectivement par réflexion ou/et par transmission. Une variante du dispositif muni d'un miroir dichroïque est aussi réalisable en le remplaçant par au moins un miroir à réflexion totale.

Analogiquement, le second parcours optique peut comprendre un guide de lumière, tel qu'une fibre optique ou un guide air afin d'amener un faisceau de la distribution de plasma au récepteur.

Alternativement à un miroir dichroïque placé à l'intérieur de la cavité du rouleau (sur l'axe normal), les premier et second parcours optiques peuvent comprendre au moins une fibre optique présentant un coude à 90° comme moyen de guidage optique délimitant ainsi une zone de fibre longeant l'axe de rotation du rouleau et une zone de fibre longeant l'axe normal au point de contact ciblé.

La disposition d'un miroir dichroïque est toutefois appréciable hors de la cavité du rouleau, de façon à séparer les deux faisceaux sortant de l'émetteur et entrant dans le récepteur si une seule fibre (ou un faisceau de plusieurs fibres conjointes) les dessert d'un même côté du rouleau.

En fonction de multiples exigences de configurations souhaitées, le dispositif selon l'invention peut être adapté de manière flexible. Il est en effet prévu de pouvoir disposer au moins l'émetteur ou/et le récepteur **hors** de la cavité interne du rouleau. Cela permet en outre de pouvoir facilement installer un instrument de type LIBS sans intervention majeure et complexe dans la cavité du rouleau. Des jointures optiques (collimateurs, lentilles...) ou mécaniques (joints tournants) sont dans ce cas nécessaires pour assurer une liaison énergétique de ces éléments ou/et une liaison optique suivant que le LIBS (émetteur ou/et récepteur) tourne ou non avec le rouleau.

En effet, il peut ainsi être prévu que l'émetteur ou/et le récepteur soit couplé en rotation synchrone avec le moyen de guidage optique, particulièrement lorsqu'il est disposé **dans** la cavité du rouleau, auquel cas il est également couplé à une liaison électrique à joint tournant, idéalement pour une alimentation énergétique, une signalisation de commande ou/et de contrôle de celui-ci.

L'ouverture sur une partie dite virole de rouleau comprend un hublot en matériau optiquement transparent ou perméable au faisceau d'ablation laser et aux émissions spectrales plasmiques induites par l'ablation. Ceci permet d'éviter que la face de la bande et son revêtement en contact avec la surface du rouleau ne soit marquée lors de son passage sur la fenêtre de tir pratiquée dans la virole du rouleau, celle-ci étant munie dudit hublot dont la surface externe est soigneusement raccordée aux bords de l'ouverture en forme de fenêtre. Plusieurs utilisations du dispositif mettant en oeuvre a méthode selon l'invention sont possibles, en particulier pour une mesure d'analyse chimique de surface de revêtement d'une bande d'acier défilant sur un rouleau en sortie d'un procédé de galvanisation.

A ce titre, il est aussi possible de prévoir une mesure très précise, à répétition sous forme quasi-continue (par la haute fréquence d'impulsions de laser), ladite mesure étant permise par le fait que même si la cible tourne en contact le rouleau, le point de ciblage reste le même dans un référentiel lié au rouleau dès lors qu'il se déplace sur l'arc-de-cercle de contact (défini dans un référentiel fixe au sol, par exemple sur un angle de 90° sur les 360° du rouleau). L'expérience a en particulier montré que la série suivante d'étapes de procédé est particulièrement bien appropriée à une telle utilisation du dispositif :
- un déclenchement de tirs temporellement successifs de faisceau d'ablation laser à diverses profondeurs de la bande et en unique point de contact de bande en défilement avec le rouleau en rotation, le dit point étant considéré comme cible des tirs,
- un déclenchement de mesures d'analyse chimique associées à chacun des tirs au dit point ciblé.
- au moins un des tirs d'ablation laser est effectué à une profondeur:
   a) entre 0 et 3 micromètres de la surface externe du revêtement de la bande, idéalement entre 1 et 2 micromètres,
   b) sous une épaisseur voisine de 40 à 60 % de l'épaisseur du revêtement,
   c) sous une épaisseur voisine de 90 à 95 % de l'épaisseur du revêtement.

Il est clair que selon le format et les caractéristiques de bande et de son revêtement, ces paramètres peuvent être adaptés. En particulier, la mesure permettant une analyse spectrale précise, la méthode selon l'invention peut autonomement évaluer si, en raison d'une présence ou d'une carence d'un élément visé du revêtement, un nouveau tir plus ou moins profond doit être engagé afin d'y remédier.

Une utilisation du dispositif de mise en oeuvre de la méthode selon l'invention est également proposée pour piloter des paramètres régissant le réglage d'une installation mettant en oeuvre le procédé de galvanisation et régissant le réglage d'un four d'alliation disposé en aval de l'installation de galvanisation. En effet, l'analyse chimique du revêtement obtenu étant très fiable, elle peut ainsi servir d'indicateur de divergence(s) dudit revêtement obtenu par rapport à un revêtement voulu et ainsi adapter le réglage des installations de revêtement pour minimiser ces divergences.

Cette utilisation du dispositif de mise en oeuvre de la méthode selon l'invention s'étend ainsi aussi à un mode pour contrôler en temps réel des données de fonctionnement du procédé de galvanisation par rapport à des données de référence. En effet, la mesure d'analyse étant effectuée sur la bande en défilement sans besoin de la ralentir ou de la figer, une boucle de réglage en temps réel est avantageusement possible.

Enfin, une utilisation du dispositif de mise en oeuvre de la méthode selon l'invention en découle pour délivrer des scénarios de pilotage performant en fonction de paramètres choisis pour assurer une obtention de données de fonctionnement sous une tolérance de données de référence. La méthode selon l'invention est ainsi rendue encore plus autonome pour converger à des revêtements dont les caractéristiques requièrent des tolérances pointues.

En particulier, l'utilisation du dispositif pour un pilotage d'une installation de galvanisation au trempé de bandes d'acier en défilement continu se caractérise ainsi par l'utilisation de mesures, réalisées à plusieurs profondeurs, de la teneur en certains éléments d'alliage du revêtement comme par exemple le fer, l'aluminium et le zinc, les mesures étant réalisées sur la bande en défilement par un dispositif d'analyse spectrométrique par ablation laser. A cet effet, des données acquises par le dispositif d'analyse sont exploitées par le système d'automatismes de commande de l'installation de galvanisation afin de piloter la puissance de chauffage du four d'alliation en fonction, notamment, de la vitesse de défilement de la bande.

D'autre part, les données acquises par le dispositif d'analyse sont transmises à un système d'optimisation de procédé de même que d'autres données enregistrées ou mesurées par ailleurs telles que le format, la composition chimique, la rugosité de surface de la bande, la composition chimique et la température du bain de revêtement, la puissance du four d'alliation, la vitesse de défilement de la bande.

Ce système d'optimisation de procédé est apte à évaluer la pertinence de données de fonctionnement du processus par rapport à une zone de fonctionnement stable et optimal prédéfinie de l'installation. Cette zone de fonctionnement pouvant être, par exemple, l'enveloppe des vitesses de défilement de bande possibles en fonction de tous les autres paramètres. C'est donc ce système d'optimisation qui est également apte à proposer des scénarios possibles d'amélioration des performances du processus à l'intérieur de ladite zone de fonctionnement stable et optimal. Ces scénarios sont basés sur des stratégies de contrôle adaptatif pouvant être de même type que celles du système d'automatismes de commande de l'installation.

Des exemples illustrant l'invention sous ses différentes catégories sont fournis à l'aide de figures décrites :
- Figure 1: Schéma général de galvanisation au trempé d'une bande d'acier en défilement,
- Figure 2: Diagramme de variations de teneurs en zinc, fer et aluminium d'un revêtement de type GA,
- Figure 3A: Dispositif d'analyse chimique selon un premier mode de réalisation de l'invention,
- Figure 3B: Dispositif d'analyse chimique selon un deuxième mode de réalisation de l'invention,
- Figure 4: Dispositif d'analyse chimique selon un troisième mode de réalisation de l'invention,
- Figure 5: Dispositif d'analyse chimique selon un quatrième mode de réalisation de l'invention,
- Figure 6: Dispositif d'analyse chimique selon un cinquième mode de réalisation de l'invention,
- Figure 7: Dispositif d'analyse chimique selon un sixième mode de réalisation de l'invention.

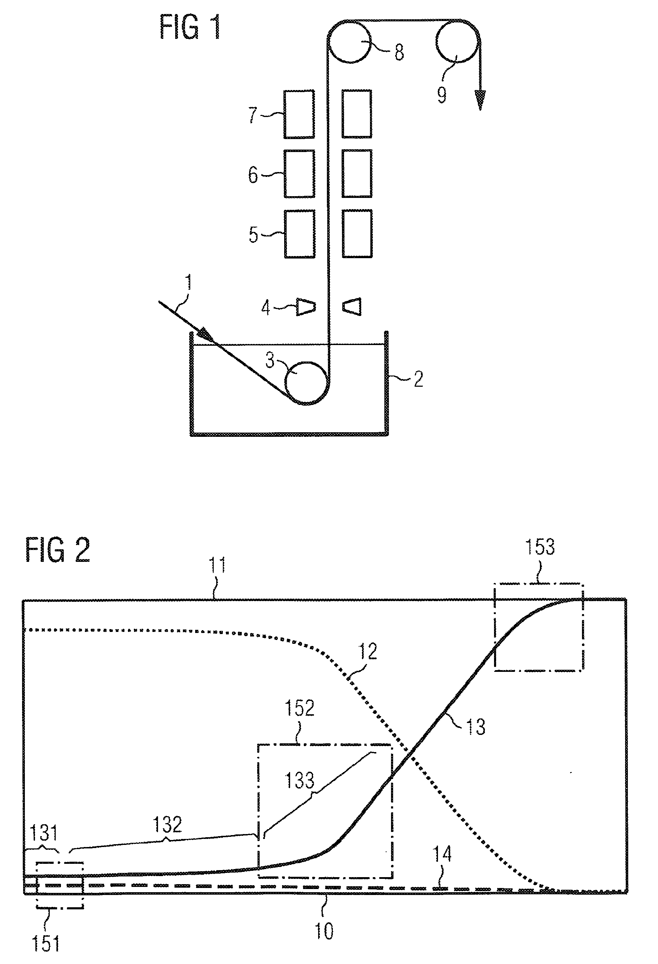

**Figure 1** montre un schéma général de galvanisation au trempé d'une bande d'acier (1) en défilement : la bande (1) en provenance d'un four de galvanisation plonge dans un bain liquide de revêtement (2) et se trouve défléchie verticalement par un rouleau immergé (3) dans le bain. La bande passe ensuite séquentiellement devant un dispositif d'essorage du film liquide (4), dans un dispositif de chauffage par induction (5), dans un dispositif de maintien en température d'alliation (6) et dans un dispositif de refroidissement (7) où le film de revêtement se solidifie. La bande s'enroule ensuite partiellement autour d'un premier rouleau déflecteur (8) puis d'un second rouleau (9) avant que ne se poursuivent des opérations de transformation et un ré-enroulage en bobines galvanisées.

**Figure 2** représente à titre d'exemple un diagramme de variations de teneurs en zinc, fer et aluminium d'un revêtement de type GA : l'axe des abscisses (10) représente une variation de profondeur dans le revêtement, la surface dudit revêtement étant à l'intersection avec l'axe des ordonnées (11) qui représente les variations de teneurs des différents éléments zinc, fer et aluminium : la courbe (12) représente la variation de teneur en zinc, la courbe (13) la variation de teneur en fer et la courbe (14) la variation de teneur en aluminium. Un premier intervalle (131) à faibles variations de profondeur de la courbe (13) correspond à une présence d'une première phase d'alliage fer / zinc dite de type ζ, un second intervalle (132) à moyennes variations de profondeur correspond à une seconde phase dite de type δ et un troisième intervalle (133) correspond à une troisième phase dite de type r. Respectivement à chacune des phases, une première zone cadre (151) du diagramme correspond ainsi à une zone préférentielle d'un premier tir d'ablation laser, et analogiquement une seconde et une troisième zones cadres (152, 153) correspondent à des zones préférentielles de tirs successifs au premier.

A l'aide de ce diagramme, il est donc possible de définir des paramètres de référence pour mettre en oeuvre la méthode selon l'invention ou d'utiliser un dispositif s'y rattachant.

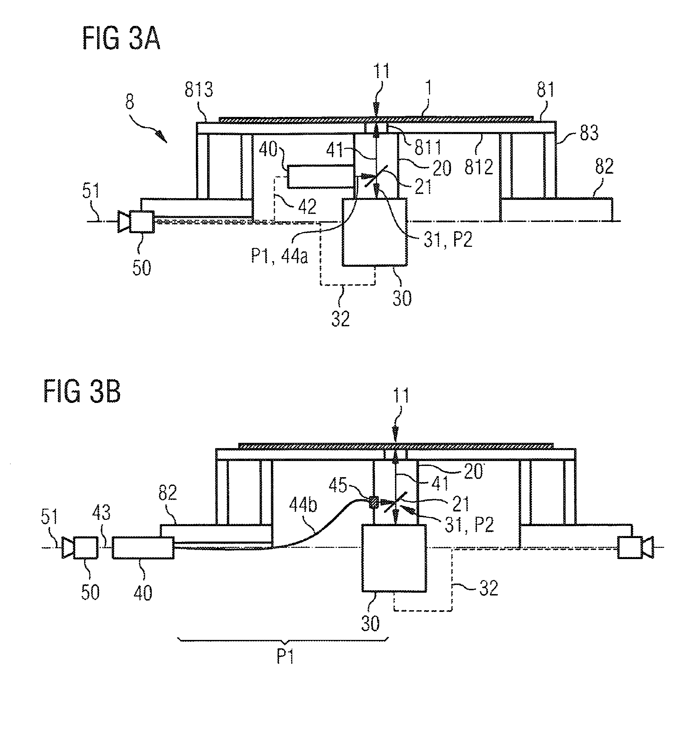

**Figure 3A** représente un dispositif d'analyse chimique selon un premier mode de réalisation de l'invention, permettant ainsi de mettre en oeuvre la méthode précitée et adaptée à l'analyse spectrale d'une couche de revêtement métallique déposé à la surface d'une bande d'acier (1), en ce que :
- ladite bande est mise en défilement selon un arc de cercle en surface externe (813) d'un rouleau (8) en rotation autour d'un axe (51), ledit rouleau étant à paroi cylindrique guidant la bande par contact,
- un faisceau dit d'ablation laser est conduit dans une cavité interne à la paroi cylindrique afin d'être mis en incidence optique sous un axe normal (41) à la surface externe du rouleau sur un point de contact ciblé (11) de la bande et du rouleau, le passage dudit faisceau au travers de la paroi étant effectué par une ouverture de paroi (811), transparente au faisceau,
- une distribution d'émission spectrale plasmique provenant de l'ablation laser au point de contact est recueillie par retour optique sous la direction de l'axe normal (41) à la surface externe du rouleau et au travers de l'ouverture afin d'être conduite vers une unité de mesure spectrale,
- l'axe normal à la surface externe adaptée à l'incidence et au retour optiques est mis en rotation synchrone avec le rouleau.

Le dispositif à cet effet représenté comprend ainsi :
- un émetteur (40) du faisceau dit d'ablation laser, un récepteur (30) d'émission spectrale plasmique,
- un premier guide de lumière (P1) disposé en sortie de 1 émetteur et adapté à la conduite du faisceau d'ablation laser dans la cavité de rouleau et présentant un moyen de guidage optique (20) pour la mise en incidence du dit faisceau sur le point de contact ciblé (11) par le laser d'ablation,
- un second guide de lumière (P2) disposé en entrée du récepteur et adapté pour recueillir la distribution d'émission spectrale plasmique au travers dudit moyen de guidage optique (20),
- au moins le moyen de guidage optique (20) est rotatif par un couplage mécaniquement synchrone à la rotation du rouleau (8, 81, 82, 83) à la surface (813) de virole (81, 812, 813) duquel la bande défile.

La bande (1) s'enroule ainsi partiellement sur un arc de cercle du rouleau (8) constitué de sa virole (81), de deux axes de (support de) rotation (82) à chacune de ses extrémités couplées à des flasques de jonction (83). Une fenêtre est ouverte dans la virole formant ainsi l'ouverture (811). Un dispositif optique en tant que moyen de guidage (20) attenant au premier guide de lumière (P1) sous forme de guide air (44a) est disposé perpendiculairement à une surface interne (812) de la virole (81) et dirige le tir du faisceau laser issu de l'émetteur (40) sur la surface de la bande (1) en contact avec une surface externe (813) de la virole (81) au travers de la fenêtre (811). Ce dispositif optique comporte un miroir dichroïque (21) qui dirige le faisceau laser issu de l'émetteur (40) en incidence sur le point ciblé (11) et laisse passer en retour via le second guide de lumière (P2) sous forme de guide air (31) un faisceau lumineux émis par le plasma vers le dispositif spectrométrique, c'est-à-dire le récepteur (30). Des lentilles de focalisation et des organes nécessaires à la fixation des dispositifs d'ablation et d'analyse (non représentés) complète le dispositif optique. L'émetteur (40) et le récepteur (30) sont respectivement reliés par des câbles (42, 32) les couplant à un joint tournant (50) lui-même connecté à un câble fixe externe au rouleau et qui apporte aux dispositifs (40, 30) l'énergie nécessaire à leur fonctionnement ainsi que la distribution des signaux contrôlant leur activité (commande, réglage, contrôle, alarmes, etc.).

Ainsi, ce dispositif présente le moyen de guidage optique (20) comme un simple un miroir dichroïque incliné à 45° par rapport à l'axe normal (41) et à l'axe de rotation (51) du rouleau.

Les premier et second parcours optiques comprennent ainsi un guide de lumière matérialisé par un simple guide air compris dans le moyen de guidage (20).

L'ouverture (811) comprend un hublot en matériau optiquement transparent au faisceau d'ablation laser et aux émissions spectrales plasmiques.

Il est à noter que dans ce mode de réalisation, l'émetteur et le récepteur sont tous deux disposées dans la cavité interne au rouleau et solidairement au rouleau pour assurer une rotation synchrone de l'axe normal (41).

Toutefois, il est seulement requis qu'au moins l'émetteur ou/et le récepteur soit couplé en rotation synchrone avec le moyen de guidage optique, particulièrement lorsqu'il est disposé **dans** la cavité du rouleau, auquel cas il est également couplé à une liaison électrique (42, 32) à joint tournant (50), idéalement pour une alimentation énergétique, une signalisation de commande ou/et de contrôle, etc.

Ce dernier aspect alternatif à figure 3A est présenté à la **figure 3B** où le récepteur (30) est disposé dans la cavité telle qu'à la figure 3A, alors que l'émetteur (40) est placé hors de la cavité par exemple à une des extrémités du rouleau. L'émetteur (40) est alors possiblement couplé mécaniquement à l'axe de rotation (51) du rouleau et possède donc un mouvement de rotation synchrone au rouleau. Dans ce cas, le premier guide de lumière (P1) comprend une fibre optique (44b) couplée au moyen de guidage (20) ou un guide d'air (non représenté) si le miroir dichroïque (21) dans le moyen de guidage (20) est alternativement placé sur l'axe de rotation (51) permettant ainsi d'intercepter le faisceau incident issu de l'émetteur (40) et de le défléchir sur le point ciblé (11). Ce dispositif d'analyse chimique selon un deuxième mode de réalisation de l'invention prévoit donc que l'émetteur et le récepteur sont ici encore en rotation synchrone avec le rouleau et l'axe normal (41).

Enfin, toujours alternativement à figure 3A et analogiquement à la disposition de l'émetteur selon figure 3B, l'émetteur et le récepteur (40, 30) peuvent être disposés tous deux hors de la cavité du rouleau. L'émetteur et le récepteur aux extrémités peuvent ainsi être mis (ou non suivant l'optique et le montage mécanique choisie aux extrémités) solidairement en rotation synchrone avec l'axe de rouleau.

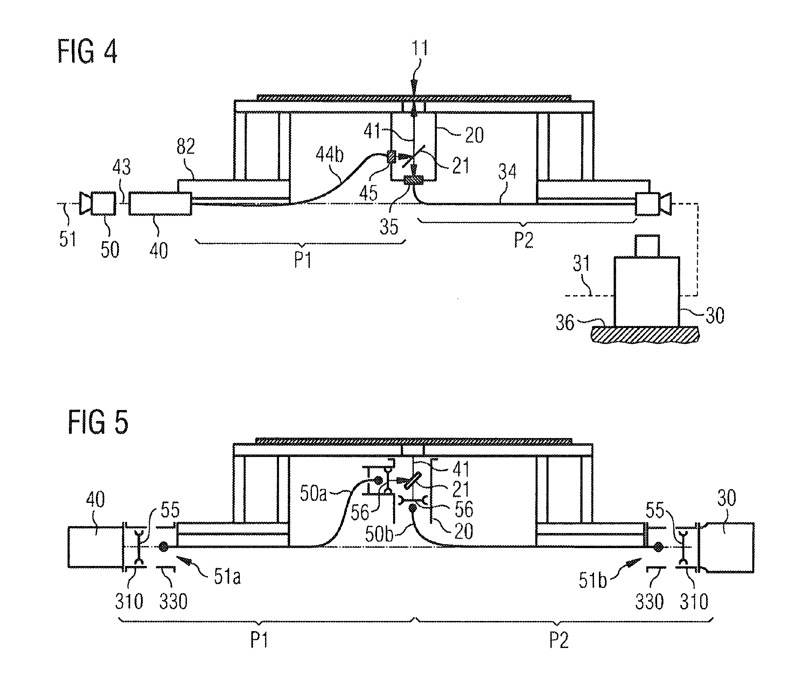

Une disposition semblable est représentée par un dispositif selon un troisième mode de réalisation illustré à la **figure** 4. L'émetteur et le récepteur sont respectivement couplés via respectivement le premiers ou le second guide de lumière (P1, P2) comprenant une fibre optique (44b, 34) au moyen de guidage (20) assurant l'incidence et le retour des faisceaux lumineux depuis une sortie de fibre optique (44b) pour l'incidence ou vers une entrée de fibre optique (34) pour le retour. Seul l'émetteur (40) est en rotation synchrone avec le rouleau et l'axe normal (41) tel qu'à la figure 3B. Le récepteur (30) est disposé non rotatif hors de la cavité et son entrée optique recevant le second guide de lumière (P2) (muni de la fibre optique 34) prévoit au besoin un couplage rotatif couplé à l'extrémité de fibre optique.

**Figure 5** représente un quatrième mode de réalisation du dispositif fondée partiellement sur la figure 4, en ce que les premier et second guides de lumière (P1, P2) comprennent respectivement une fibre optique (50a, 50b) aboutissant sur un moyen de guidage (20) muni d'un miroir dichroïque (21) et d'optiques de couplage (56) des fibres et placé face à l'ouverture de virole vers le point ciblé de tir. A la différence de figure 4, les fibres optiques (50a, 50b) définissant les guides de lumière (P1, P2) sont en rotation synchrone (solidairement) avec le rouleau et leur entrée ou sortie aux extrémités de l'axe du rouleau. Elles sont par exemple disposées dans une de deux embouchures (51a, 51b) de maintien de fibre sur l'axe de rotation du rouleau, celle-ci recevant ou émettant un faisceau lumineux dans une optique de couplage transitoire (55) reliée respectivement à l'émetteur (40) ou au récepteur (30), ceux-ci étant fixes par rapport au sol (donc désolidarisés du rouleau et non rotatif)d' un coté et de l'autre de l'axe du rouleau. Des moyens de protection (310, 330) de ce couplage optique transitoire de type aérien est possible par exemple au moyen de une tubulure isolante, solidaires du rouleau ou de l'émetteur ou du récepteur. Ce mode de réalisation permet encore d'éviter d'implanter l'émetteur et le récepteur dans la cavité du rouleau, et nécessite une simple adaptation électriquement et optiquement « passive » dans ladite cavité, ce qui rend la conception ou la maintenance du rouleau plus simple.

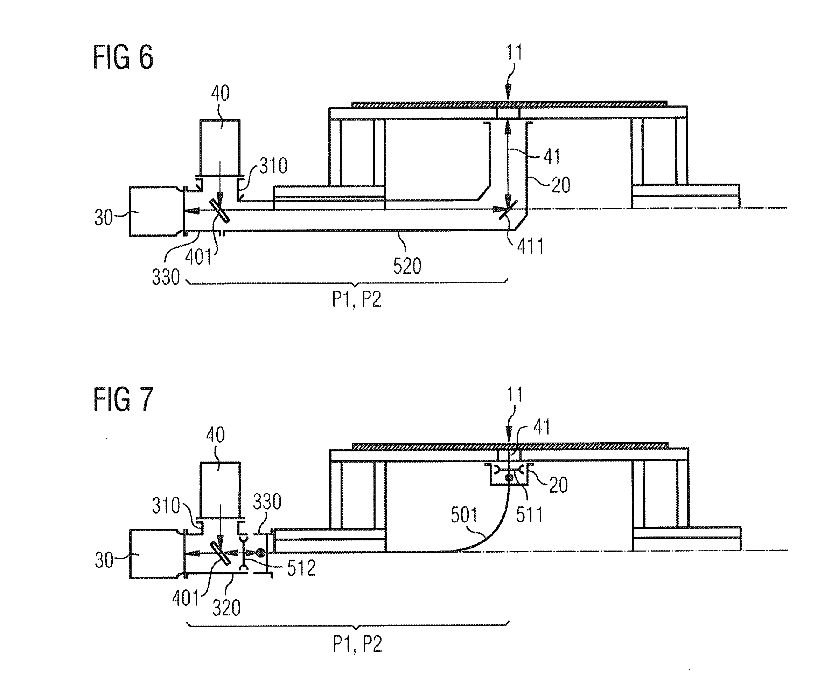

**Figure 6** présente un cinquième mode de réalisation selon la figure 5, en ce que l'émetteur et le récepteur sont disposés hors de la cavité du rouleau, mais ici de façon solidaire à l'axe de rotation du rouleau (par des moyens de couplage (310, 330) pour une fixation mécanique à l'axe rotatif du rouleau, analoguement à une des extrémités de rouleau selon figure 6). Cette dernière solidarisation n'est toutefois pas indispensable et peut être évitée par une optique de couplage telle qu'à la figure 5 (où les éléments 330, 55 seraient désolidarisés). Dans ce cas, un élément de découplage en rotation est disposé entre les éléments dits de couplage (310, 330) et le guide d'air (520). Il est à noter que la solidarisation de l'émetteur et du récepteur au rouleau ou son axe apporte un avantage de compensation total de vibrations gênantes. Ainsi, une possible désolidarisation de ces éléments par rapport au rouleau exige que des moyens de couplage ou découplage assurent une compensation satisfaisante de vibrations. Ceci est possible techniquement, mais peut rendre la réalisation plus complexe.

A la figure 6, l'émetteur et le récepteur sont aussi reliés à un même et unique parcours optique en guise de premier et second guides de lumière (P1, P2), tel qu'une simple conduite aérienne (520) prévue dans l'axe de rotation du rouleau. Un miroir à réflexion totale (411) adapté à former une incidence et un retour optique sur/du point ciblé (11) est disposé dans la cavité de rouleau, et intersecte la conduite aérienne sous une inclinaison à 45° de la direction principale de la conduite aérienne (520) parallèle (et identique) à l'axe de rotation du rouleau. Un miroir dichroïque (401) est disposé hors de la cavité du rouleau permettant de canaliser les faisceaux lumineux sortant et entrant entre soit l'émetteur soit le récepteur et l'unique conduite aérienne (520). Grâce à cet arrangement, l'émetteur, le récepteur et le miroir dichroïque (401) peuvent être disposés sous forme monobloc du même côté du rouleau (solidairement ou non à celui-ci), facilitant ainsi la mise en oeuvre et la maintenance du rouleau ainsi que celles du dispositif même de mesure. La jonction entre l'unique conduite aérienne (520) et ledit monobloc peut être rotative pour éviter que le monobloc soit entrainé en rotation avec le rouleau.

**Figure 7** présente un sixième mode de réalisation selon la figure 6, mais pour lequel le miroir à réflexion totale (élément 411 selon figure 6) est remplacé par au moins une fibre optique (501) (à bande passante adaptée) ou un faisceau de fibres optiques dont la bande passante optique globale est adaptée à transmettre et réceptionner les faisceaux incidents et de retour au point ciblé (11) par le laser d'ablation focalisé par une simple lentille (511) audit point. Une optique de collimation (512) disposée entre le miroir dichroïque (401) externe au rouleau et la fibre ou le faisceau de fibres (501) pour la/les coupler optiquement avec l'émetteur et le récepteur (40, 30). Identiquement à la figure 6, une configuration comprenant l'émetteur, le récepteur et le miroir dichroïque sous forme de monobloc est possible afin de permettre une jonction découplable d'un entraînement en rotation par le rouleau.

## Revendications

1. Méthode d'analyse spectrale d'une couche de revêtement métallique déposé à la surface d'une bande d'acier (1), pour laquelle :
- ladite bande est mise en défilement selon un arc de cercle en surface externe (813) d'un rouleau (8) en rotation, ledit rouleau étant à paroi cylindrique guidant la bande par contact,
**caractérisée par** les étapes suivantes :
- un faisceau dit d'ablation laser est conduit dans une cavité interne à la paroi cylindrique afin d'être mis en incidence optique sous un axe normal (41) à la surface externe du rouleau sur un point de contact ciblé (11) de la bande et du rouleau, le passage dudit faisceau au travers de la paroi étant effectué par une ouverture de paroi (811), transparente au faisceau,
- une distribution d'émission spectrale plasmique provenant de l'ablation laser au point de contact est recueillie par retour optique sous la direction de l'axe normal (41) à la surface externe du rouleau et au travers de l'ouverture afin d'être conduite vers une unité de mesure spectrale,
- l'axe normal (41) à la surface externe adaptée à l'incidence et au retour optiques est mis en rotation synchrone avec le rouleau.

2. Dispositif de mise en oeuvre de la méthode selon revendication 1 adaptée à l'analyse spectrale d'une couche de revêtement métallique déposé à la surface d'une bande d'acier, comprenant : un rouleau, ladite bande comprenant : un rouleau, mise en défilement selon un arc de cercle en surface externe (813) du rouleau (8) en rotation, ledit rouleau étant à paroi cylindrique guidant la bande par contact,
- un émetteur (40) d'un faisceau dit d'ablation laser, un récepteur (30) d'émission spectrale plasmique, **caractérisé par** :- un premier guide de lumière (P1) disposé en sortie de l émetteur et adapté à la conduite du faisceau d'ablation laser dans une cavité de rouleau et présentant un moyen de guidage optique (20) pour la mise en incidence du dit faisceau sur le point de contact ciblé,
- un second guide de lumière (P2) disposé en entrée du récepteur et adapté pour recueillir la distribution d'émission spectrale plasmique au travers dudit moyen de guidage optique (20),
- au moins le moyen de guidage optique (20) est rotatif par un couplage mécaniquement synchrone à la rotation du rouleau.

3. Dispositif selon revendication 2, pour lequel le moyen de guidage optique (20) comprend un miroir, idéalement dichroïque, et incliné à 45° par rapport à l'axe normal et à l'axe de rotation du rouleau.

4. Dispositif selon revendication 3, pour lequel le premier guide de lumière est une fibre optique (44b, 50a, 501) ou un guide air (44a, 520).

5. Dispositif selon revendication 3 ou 4, pour lequel le second un guide de lumière est une fibre optique (34, 50b, 501) ou un guide air (31, 520).

6. Dispositif selon revendication 2, pour lequel les premier et second guides de lumière comprennent au moins une fibre optique présentant un coude à 90° comme moyen de guidage optique (20) délimitant une zone de fibre longeant l'axe de rotation (51) du rouleau et une zone de fibre longeant l'axe normal (41) au point de contact ciblé.

7. Dispositif selon une des revendications 2 à 6, pour lequel au moins l'émetteur ou/et le récepteur est disposé hors de la cavité interne du rouleau.

8. Dispositif selon une des revendications 2 à 6, pour lequel au moins l'émetteur ou/et le récepteur est couplé en rotation synchrone avec le moyen de guidage optique, particulièrement lorsqu'il est disposé dans la cavité du rouleau, auquel cas il est également couplé à une liaison électrique à joint tournant, idéalement pour une alimentation énergétique, une signalisation de commande ou/et de contrôle

9. Dispositif selon une des revendications 2 à 8, pour lequel l'ouverture (811) comprend un hublot en matériau optiquement transparent au faisceau d'ablation laser et aux émissions spectrales plasmiques.

10. Utilisation du dispositif selon une des revendications 2 à 9 pour une mesure d'analyse chimique de surface de revêtement d'une bande d'acier défilant sur un rouleau en sortie d'un procédé de galvanisation.

11. Utilisation selon revendication 10 incluant :
- un déclenchement de tirs temporellement successifs de faisceau d'ablation laser à diverses profondeurs de la bande et en unique point de contact de bande en défilement avec le rouleau en rotation, le dit point étant considéré comme cible des tirs,
- un déclenchement de mesures d'analyse chimique associées à chacun des tirs au dit point ciblé.

12. Utilisation selon revendication 11 pour laquelle au moins un des tirs d'ablation laser est effectué à une profondeur:
- entre 0 et 3 micromètres de la surface externe du revêtement de la bande, idéalement entre 1 et 2 micromètres,
- sous une épaisseur voisine de 40 à 60 % de l'épaisseur du revêtement,
- sous une épaisseur voisine de 90 à 95 % de l'épaisseur du revêtement.

13. Utilisation du dispositif selon une des revendications 10 à 12 pour piloter des paramètres régissant le réglage d'une installation mettant en oeuvre le procédé de galvanisation et régissant le réglage d'un four d'alliation disposé en aval de l'installation de galvanisation.

14. Utilisation selon une des revendications 10 à 13 pour contrôler en temps réel des données de fonctionnement du procédé de galvanisation par rapport à des données de référence.

15. Utilisation selon revendication 14 pour délivrer des scénarios de pilotage performant en fonction de paramètres choisis pour assurer une obtention des données de fonctionnement du procédé de galvanisation sous une tolérance de données de référence.

## Patentansprüche

1. Verfahren zur Spektralanalyse einer auf der Oberfläche eines Stahlbands (1) abgeschiedenen metallischen Beschichtung, wobei:
- das Band entlang eines Kreisbogens über eine Außenfläche (813) einer rotierenden Walze (8) laufen gelassen wird, wobei die Walze eine zylindrische Wand aufweist, die das Band mittels Kontakt führt,
**gekennzeichnet durch** die folgenden Schritte:
- ein sogenannter Ablations-Laserstrahl wird in einen Hohlraum innerhalb der zylindrischen Wand eingeführt, sodass er mit einer optischen Einfallsrichtung mit einer zu der Außenfläche der Walze senkrechten Achse (41) auf einen Ziel-Kontaktpunkt (11) des Bandes und der Walze fällt, wobei der Durchgang des Strahls **durch** die Wand durch eine Wandöffnung (811) erfolgt, die für den Strahl durchlässig ist,
- eine spektrale Plasmaemissionsverteilung, die von der Laserablation im Kontaktpunkt stammt, wird **durch** optische Rückmeldung in der Richtung der zu der Außenfläche der Walze senkrechten Achse (41) und **durch** die Öffnung hindurch aufgefangen, um zu einer Spektralmesseinheit geleitet zu werden,
- die zu der Außenfläche senkrechte Achse (41), die an die optische Einfallsrichtung und die optische Rückmeldung angepasst ist, wird in eine mit der Walze synchrone Rotation versetzt.

2. Vorrichtung zur Durchführung des Verfahrens nach Anspruch 1, das für die Spektralanalyse einer auf der Oberfläche eines Stahlbands abgeschiedenen metallischen Beschichtung geeignet ist, welche umfasst:
- eine Walze, wobei das Band entlang eines Kreisbogens über eine Außenfläche (813) der rotierenden Walze (8) laufen gelassen wird, wobei die Walze eine zylindrische Wand aufweist, die das Band mittels Kontakt führt,
- einen Sender (40) eines sogenannten Ablations-Laserstrahls, einen Empfänger (30) für spektrale Plasmaemission,
**gekennzeichnet durch**:
- einen ersten Lichtleiter (P1), der am Ausgang des Senders angeordnet ist und zum Leiten des Ablations-Laserstrahls in einen Hohlraum der Walze eingerichtet ist und ein optisches Führungsmittel (20) aufweist, um ein Einfallen des Strahls auf den Ziel-Kontaktpunkt zu bewirken,
- einen zweiten Lichtleiter (P2), der am Eingang des Empfängers angeordnet ist und dazu eingerichtet ist, die spektrale Plasmaemissionsverteilung **durch** das optische Führungsmittel (20) hindurch aufzufangen,
- wenigstens das optische Führungsmittel (20) ist **durch** eine Kopplung drehbar, die zu der Rotation der Walze mechanisch synchron ist.

3. Vorrichtung nach Anspruch 2, wobei das optische Führungsmittel (20) einen Spiegel umfasst, der idealerweise dichroitisch ist und um 45° bezüglich der normalen Achse und der Drehachse der Walze geneigt ist.

4. Vorrichtung nach Anspruch 3, wobei der erste Lichtleiter eine Lichtleitfaser (44b, 50a, 501) oder ein Luftleiter (44a, 520) ist.

5. Vorrichtung nach Anspruch 3 oder 4, wobei der zweite Lichtleiter eine Lichtleitfaser (34, 50b, 501) oder ein Luftleiter (31, 520) ist.

6. Vorrichtung nach Anspruch 2, wobei der erste und der zweite Lichtleiter wenigstens eine Lichtleitfaser, die eine Biegung von 90° aufweist, als optisches Führungsmittel (20) umfassen, die einen entlang der Drehachse (51) der Walze verlaufenden Faserbereich und einen entlang der zu dem Ziel-Kontaktpunkt senkrechten Achse (41) verlaufenden Faserbereich begrenzt.

7. Vorrichtung nach einem der Ansprüche 2 bis 6, wobei wenigstens der Sender und/oder der Empfänger außerhalb des inneren Hohlraums der Walze angeordnet sind/ist.

8. Vorrichtung nach einem der Ansprüche 2 bis 6, wobei wenigstens der Sender und/oder der Empfänger in synchroner Rotation mit dem optischen Führungsmittel gekoppelt sind/ist, insbesondere wenn sie/er in dem Hohlraum der Walze angeordnet sind/ist, wobei sie/er in diesem Falle auch mit einer elektrischen Verbindung mit Drehverbindung, idealerweise für eine Stromversorgung, eine Steuerungs- und/oder Kontrollsignalisierung, gekoppelt sind/ist.

9. Vorrichtung nach einem der Ansprüche 2 bis 8, wobei die Öffnung (811) ein Fenster aus einem Material umfasst, welches für den Ablations-Laserstrahl und für die spektralen Plasmaemissionen optisch durchlässig ist.

10. Verwendung der Vorrichtung nach einem der Ansprüche 2 bis 9 für eine Messung zur chemischen Oberflächenanalyse der Beschichtung eines über eine Walze laufenden Stahlbandes am Ausgang eines Galvanisierungsverfahrens.

11. Verwendung nach Anspruch 10, welche beinhaltet:
- eine Auslösung von zeitlich aufeinanderfolgenden Schüssen eines Ablations-Laserstrahls in verschiedene Tiefen des Bandes und an einem einzigen Kontaktpunkt des vorbeilaufenden Bandes mit der rotierenden Walze, wobei dieser Punkt als Ziel der Schüsse betrachtet wird,
- eine Auslösung von den einzelnen Schüssen zugeordneten Messungen zur chemischen Analyse an dem Zielpunkt.

12. Verwendung nach Anspruch 11, wobei wenigstens einer der Laserablations-Schüsse in eine Tiefe erfolgt:
- zwischen 0 und 3 Mikrometern von der Außenoberfläche der Beschichtung des Bandes, idealerweise zwischen 1 und 2 Mikrometern,
- unter eine Dicke, die etwa 40 bis 60 % der Dicke der Beschichtung beträgt,
- unter eine Dicke, die etwa 90 bis 95 % der Dicke der Beschichtung beträgt.

13. Verwendung der Vorrichtung nach einem der Ansprüche 10 bis 12, um Parameter anzusteuern, welche die Einstellung einer Anlage bestimmen, mit der das Galvanisierungsverfahren durchgeführt wird, und welche die Einstellung eines Legierofens bestimmen, welcher der Galvanisierungsanlage nachgeschaltet ist.

14. Verwendung nach einem der Ansprüche 10 bis 13, um in Echtzeit Betriebsdaten des Galvanisierungsverfahrens in Bezug auf Referenzdaten zu kontrollieren.

15. Verwendung nach Anspruch 14, um Szenarien einer leistungsstarken Ansteuerung in Abhängigkeit von gewählten Parametern zu liefern, um eine Erzielung der Betriebsdaten des Galvanisierungsverfahrens unter Einhaltung einer Toleranz in Bezug auf Referenzdaten zu gewährleisten.

## Claims

1. Method for the spectral analysis of a metal coating layer deposited on the surface of a steel strip (1), wherein:
- said strip is moved along an outer-surface arc (813) of a rotating roll (8), said roll having a cylindrical wall guiding the strip by contact,
**characterised by** the following steps:
- a "laser ablation" beam is delivered via an internal cavity to the cylindrical wall such that it is optically incident, along an axis (41) normal to the outer surface of the roll, on a target contact point (11) of the strip and the roll, said beam passing through the wall via a wall opening (811), which is transparent to the beam,
- a spectral plasma emission distribution from the laser ablation of the contact point is collected by optical feedback along the axis (41) normal to the outer surface of the roll and through the opening in order to be delivered to a spectral measurement unit,
- the axis (41) normal to the outer surface used for optical incidence and feedback is moved in rotation synchronous to the roller.

2. Device for implementing the method according to claim 1 adapted for the spectral analysis of a metal coating layer deposited on the surface of a steel strip, comprising:
- a roll, said strip being moved along an outer-surface arc (813) of the rotating roll (8), said roll having a cylindrical wall guiding the strip by contact,
- a "laser ablation" beam emitter (40) and a spectral plasma emission receiver (30),
**characterised by**: a first light guide (P1) arranged at the output of the emitter, designed to guide the laser ablation beam through a roll cavity and having an optical guiding means (20) to ensure the incidence of said beam on the target contact point,
- a second light guide (P2) arranged at the input of the receiver and designed to collect the spectral plasma emission distribution through said optical guiding means (20),
- at least the optical guiding means (20) is rotatable by a mechanical coupling synchronous to the rotation of the roll.

3. Device according to claim 2, wherein the optical guiding means (20) includes a mirror, ideally dichroic, inclined at 45° from the normal axis and the axis of rotation of the roll.

4. Device according to claim 3, wherein the first light guide is an optical fibre (44b, 50a, 501) or an air guide (44a, 520).

5. Device according to claim 3 or 4, wherein the second light guide is an optical fibre (34, 50b, 501) or an air guide (31, 520).

6. Device according to claim 2, wherein the first and second light guides comprise at least one optical fibre having a 90° elbow as an optical guiding means (20) delimiting a fibre zone alongside the axis of rotation (51) of the roll and a fibre zone alongside the axis (41) normal to the target contact point.

7. Device according to one of claims 2 to 6, wherein at least the emitter and/or the receiver is arranged outside the internal cavity of the roll.

8. Device according to one of claims 2 to 6, wherein at least the emitter and/or receiver is coupled in synchronous rotation with the optical guiding means, particularly if it is placed inside the cavity of the roll, in which case it is also coupled to an electrical link having a rotary joint, ideally for a power supply, a command signal and/or a control signal.

9. Device according to one of claims 2 to 8, wherein the opening (811) includes a porthole made of material that is optically transparent to the laser ablation beam and to the spectral plasma emissions.

10. Use of the device according to one of claims 2 to 9 to perform a chemical analysis measurement of the coating surface of a steel strip moving over a roll following a galvanising process.

11. Use according to claim 10 including:
- temporally successive ablation laser beams fired to different depths of the strip at the same contact point of the moving strip with the roll in rotation, said point being the firing target,
- chemical analysis measurements related to each of the lasers fired at said target point.

12. Use according to claim 11, wherein at least one of the ablation lasers is fired to a depth:
- of between 0 and 3 micrometres of the outer surface of the coating of the strip, ideally between 1 and 2 micrometres,
- to a depth of around 40-60% of the depth of the coating,
- to a depth of around 90-95% of the depth of the coating.

13. Use of the device according to one of claims 10 to 12 to control the parameters determining the settings of an installation implementing the galvanising method and determining the settings of an alloying furnace arranged downstream of the galvanising installation.

14. Use according to one of claims 10 to 13 to control, in real time, the operating data of the galvanising process in relation to reference data.

15. Use according to claim 14 to establish high-performance control scenarios as a function of parameters selected to ensure the operating data obtained from the galvanising process falls within reference data tolerance levels.
